(19) Europäisches Patentamt
European Patent Office
Office européen des brevets

(11) Veröffentlichungsnummer : **0 176 717 B1**

(12) # EUROPÄISCHE PATENTSCHRIFT

(45) Veröffentlichungstag der Patentschrift : **02.03.88**

(21) Anmeldenummer : **85110195.6**

(22) Anmeldetag : **14.08.85**

(51) Int.Cl.⁴ : **B 65 G 17/46**, B 05 C 13/02

(54) **Haltevorrichtung für Dosenrümpfe oder einendig offene Dosen zum Transport auf Förderern.**

(30) Priorität : **05.10.84 DE 3436513**

(43) Veröffentlichungstag der Anmeldung : **09.04.86 Patentblatt 86/15**

(45) Bekanntmachung des Hinweises auf die Patenterteilung : **02.03.88 Patentblatt 88/09**

(84) Benannte Vertragsstaaten : **AT BE CH DE FR GB IT LI LU NL SE**

(56) Entgegenhaltungen :
**EP-A- 0 019 669**
**DE-A- 3 234 441**
**GB-A- 1 402 493**

(73) Patentinhaber : **Schmalbach-Lubeca AG**
**Schmalbachstrasse 1**
**D-3300 Braunschweig (DE)**

**Eisenmann Maschinenbaugesellschaft mbH**
**Tübinger Strasse 81**
**D-7030 Böblingen (DE)**

(72) Erfinder : **Bolte, Georg, Dr. Dipl.-Chem.**
**Klosterhof 15**
**D-3303 Vechelde (DE)**
Erfinder : **Schwarz, Helmut, Ing.**
**Adlerstrasse 24**
**D-7030 Böblingen (DE)**

(74) Vertreter : **Döring, Rudolf, Dr.-Ing.**
**Patentanwälte Dr.-Ing. R. Döring Dipl.-Phys. Dr. J. Fricke Jasperallee 1a**
**D-3300 Braunschweig (DE)**

**EP 0 176 717 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Haltevorrichtung für Dosenrümpfe oder einendig offene Dosen zum Transport auf Förderern, insbesondere zur Förderung durch Behandlungszonen für die Dosenrümpfe oder Dosen.

Zum Transport von Dosenrümpfen oder einendig offenen Dosen auf Förderern, beispielsweise zur Zuführung zu Behandlungszonen bzw. zum Hindurchfördern durch die Behandlungszonen werden die Dosenrümpfe in der Regel aufrechtstehend dicht nebeneinander auf dem Förderer angeordnet, ohne daß eine seitliche Abstützung der Dosenrümpfe erfolgt. Allenfalls sind gegen seitliches Abrutschen der Dosen von dem Förderer Begrenzungsleisten vorgesehen, welche entweder von dem Förderer selbst gebildet sind oder als ortsfeste Leisten seitlich neben dem Förderer angeordnet verlaufen. In dieser Weise werden beispielsweise Dosenrümpfe Trocknungs- bzw. Einbrennöfen zugeführt und auch durch diese Öfen in dieser Weise hindurchgeleitet.

Zur Förderung von einendig offenen Dosen werden vielfach Förderer verwendet, auf denen die Dosen mit der Öffnungsseite stehend unter der Einwirkung von Unterdruck gehalten werden. Für die Erzeugung und Aufrechterhaltung dieses Unterdruckes in den auf ihrem Öffnungsrand stehenden einendig offenen Dosen sind erhebliche Aufwendungen erforderlich.

Schließlich sind sog. Magnetbandförderer bekannt, welche in Verbindung mit einendig offenen Dosen aus ferromagnetischem Material verwendet werden, um die Dosen aufgrund magnetischer Kräfte sicher auf dem Förderer zu halten.

Schwierigkeiten bestehen bei den bekannten Förderern mit den beschriebenen Einrichtungen zur Halterung der Dosen, wenn im Zuge des Förderers eine Richtungsänderung nach oben oder unten erfolgt, weil sowohl die durch das Vakuum erzeugten Saugkräfte als auch die magnetischen Haltekräfte nur dann hinreichend zur Wirkung kommen können, wenn die Dose mit ihrer Standfläche vollständig auf dem Förderer aufliegt.

Die bekannten Förderer mit ihren Halteeinrichtungen zur Erzielung und Aufrechterhaltung eines sicheren Standes der Dosen auf dem Förderer sind für den Transport der Dosen oder Dosenrümpfe durch Tauchbäder völlig ungeeignet und für die Förderung durch andere Behandlungszonen, in denen die Dosen oder Dosenrümpfe allseits der Einwirkung eines Behandlungsmediums ausgesetzt werden sollen, wie beispielsweise zur Trocknung oder zum Einbrennen einer Lackbeschichtung, nur bei Inkaufnahme großer Nachteile verwendbar.

Aus dem vorgenannten Grunde hat man für die Tauchbehandlung von Dosenrümpfen besondere Halteeinrichtungen entwickelt, die oberhalb des Tauchbades angeordnet sind und aus zwei parallel zueinander verlaufenden ebenen siebförmigen Trägern bestehen, zwischen denen die Dosenrümpfe aufgenommen und gemeinsam mit den Siebträgern in die Behandlungsflüssigkeit abgesenkt werden.

Zur Tauchbehandlung von einendig offenen Dosenrümpfen eignen sich derartige zusammenwirkende Siebträger nicht, so daß man aus diesem Grunde, beispielsweise für die Elektrotauchlackierung, Drehtische mit Tauchzellen entwickelt hat, in welche die Dosenrümpfe mit ihrem offenen Ende nach unten eingebracht und zentriert sowie durch eine im Zentrum der Außenseite des Bodens angreifende Elektrode gehalten und durch ein besonderes Zu- und Abführungssystem für den Elektrolyten von diesem außen und innen umspült werden (EU-OS 0019669).

Der Erfindung liegt die Aufgabe zugrunde, eine Haltevorrichtung der einleitend genannten Art so auszubilden, daß die Dosenrümpfe oder einendig offenen Dosen, bezogen auf den Förderweg, sowohl nach oben als auch hängend nach unten weisend sowie auch bei einer Richtungsänderung des Förderers sicher gehalten und in einfacher Weise in die Halteposition überführt bzw. von der Haltevorrichtung abgenommen werden können.

Die Lösung vorstehender Aufgabe besteht darin, daß auf einem mit dem Förderer verbindbaren oder bei einem Gliederförderer auf einem als Glied des Förderers ausgebildeten ebenen Tragteil aufragende Bügel aus federndem Werkstoff befestigt und zum klemmenden und schnappartigen Erfassen der Dosenrümpfe oder Dosen an diametral gegenüberliegenden Stellen je zwei Bügelpaare einander zugeordnet sind, deren Bügel sich jeweils kreuzende benachbarte Abschnitte aufweisen und von denen jeweils ein Bügel zur Anlage an die Randkante und der andere Bügel zur Abstützung an der Außenwandfläche der dem Tragteil zugekehrten Anrollung des Dosenrumpfes oder der Dose vorgesehen ist.

Bei der vorgenannten Ausbildung der Haltevorrichtung kann die zum schnappartigen Erfassen der Dosenrümpfe oder Dosen notwendige Spreizung der diametral gegenüberliegenden Bügelpaare durch den zu erfassenden Dosenrumpf bzw. die zu erfassende Dose erfolgen, indem der Dosenrumpf bzw. die Dose in axialer Richtung zwischen die Bügelpaare gedrückt wird, bis die Bügelpaare ihre Schnappstellung erreichen. Umgekehrt kann durch entsprechend axialen Druck auf den schnappartig erfaßten Rand des Dosenrumpfes bzw. der Dose in Richtung vom Förderer weg die Dose aus der Haltevorrichtung wieder entnommen werden.

Durch die beschriebene Anlage der Bügel an dem Dosenrumpf bzw. dem Bördelrand der einendig offenen Dose ist die gesamte Innen- und Außenfläche des Dosenrumpfes bzw. der Dose für Behandlungsmedien zugänglich. Die Anlagestellen der Bügel an dem Bördelrand liegen dabei in jenen Bereichen, die nach dem Verschließen des Dosenrumpfes bzw. der Dose innerhalb der Falznaht zu liegen kommen. Dies hat den großen

Vorteil, daß die genannten Anlagestellen der Bügel korrosionsgeschützt in der Falznaht untergebracht werden. Wenn beispielsweise die Dose bzw. der Dosenrumpf einer Tauchbehandlung ausgesetzt werden, um einen Korrosionsschutz auf die Innen- und Außenwandfläche aufzubringen, entstehen an den Anlagestellen der Bügel Fehlstellen in dem Korrosionsschutz, die sich jedoch gemäß vorstehenden Ausführungen bei der verschlossenen Dose nicht mehr nachteilig bemerkbar machen können.

Zweckmäßig ist es, wenn die Bügel aus Federstahl bestehen und lösbar sowie einzeln und/oder paarweise an dem Tragteil gehalten sind. Bei der Elektrotauchlackierung dienen die Bügel aus Federstahl zugleich als Potentialverbindungen, um die Dosenrümpfe bzw. Dosen mit dem einen Pol der Spannungsquelle zu verbinden.

Die Bügel können dabei auf dem ebenen Tragteil verstellbar angeordnet sein, um sie an unterschiedliche Dosendurchmesser anpassen zu können.

Eine besonders zweckmäßige Lösung ergibt sich, wenn jeder Bügel U-förmig ausgebildet und mit Abwinklungen an den Enden der freien Schenkel über eine jeweils einem Bügelpaar zugeordnete Klemmplatte an dem Tragteil gehalten ist. Die bei dieser Form mit ihren Mittelschenkeln von der Tragplatte wegweisenden Bügel zeichnen sich durch eine besondere Formstabilität und hohe Federungskraft aus. Die Breite der Bügel wird dabei zweckmäßigerweise so gewählt, daß sie mindestens einem Drittel des Durchmessers der zu haltenden Dosenrümpfe oder einendig offenen Dosen entspricht.

Eine besonders praktische Lösung ergibt sich, wenn die Bügel der jeweils einander zugeordneten Paare, welche zur Anlage an die Randkante der Anrollung des Dosenrumpfes oder der einendig offenen Dose vorgesehen sind, wenigstens im Bereich ihrer Anlage an dieser Randkante voneinander weggeneigte Abschnitte aufweisen und wenn die anderen Bügel der Paare mit einander zugeneigten Abwinklungen zum Abstützen an der Außenwandfläche der Anrollung ausgerüstet sind. Um bei dieser Ausführung ein sicheres Hineingleiten des zu erfassenden Bördelrandes des Dosenrumpfes bzw. der Dose in die klemmende Schnappstellung zu erreichen, ist vorgesehen, daß die Bügel zum Abstützen an der Außenwandfläche der Anrollung von den einander zugeneigten Abwinklungen ausgehende, voneinander wegweisende Endabschnitte aufweisen, welche etwa parallel zu den Anlageabschnitten der anderen Bügel des jeweiligen Paares verlaufen.

Eine besonders stabile Anordnung der Bügel wird erreicht, wenn alle Bügel etwa lotrecht zu dem Tragteil aufragende Abschnitte aufweisen, an die sich die genannten Abwinklungen jeweils anschließen.

Der ebene Tragteil, an welchem die Bügel befestigt sind, kann in einfacher Weise als Platte ausgebildet sein, wobei diese Platte bei Verwendung der Haltevorrichtung für die elektrische Tauchlackierung zweckmäßig aus einem nicht elektrischen Werkstoff besteht. Die Platte kann daher auch schmal nach Art einer Stange ausgebildet sein.

In vielen Fällen ist es zweckmäßig, wenn der ebene Tragteil als siebartig gelochte Platte ausgebildet ist. Die Lochung der Platte gestattet bei der Förderung der Dosenrümpfe oder Dosen durch strömende Behandlungsmedien auch das Durchströmen dieser Behandlungsmedien, beispielsweise wenn zur Erzielung eines Trocknungsvorganges Heißluft oder heiße Gase auch in das Innere der Dosenrümpfe bzw. der einendig offenen Dosen geblasen werden soll.

Die Befestigung der ebenen Tragteile an dem Förderer kann ohne Schwierigkeiten auch so ausgeführt sein, daß die Platte um eine in Förderrichtung laufende Schwenkachse bewegbar gehalten ist, so daß beispielsweise zur Erzielung eines Tauchvorganges die zunächst oberhalb des Förderers befindlichen Dosen oder Dosenrümpfe durch Verschwenken der Tragteile in das Tauchbad eingetaucht und in hängender Position durch das Tauchbad hindurchgeführt werden. Am Ende des Tauchbades können durch entsprechende Rückschwenkung der Tragteile die Dosen bzw. Dosenrümpfe wieder aus dem Tauchbad herausgehoben und in ihre ursprüngliche Position gebracht werden.

Die Zeichnung gibt ein Ausführungsbeispiel der Erfindung in schematischer Darstellung wieder.

Es zeigen :

Fig. 1 eine teilweise Seitenansicht der erfindungsgemäß ausgebildeten Haltevorrichtung,

Fig. 2 eine andere Seitenansicht der Anordnung nach Fig. 1, und zwar in Blickrichtung des Pfeiles A,

Fig. 3 in vergrößerter Darstellung einen Teilausschnitt aus der Anordnung nach der Fig. 1, an welcher die Freigabe der in der Haltevorrichtung gehaltenen einendigen Dose demonstriert wird.

Die in den Figuren wiedergegebene Halteeinrichtung besteht aus einem ebenen Tragteil 1, welches in dem dargestellten Beispiel als Tragplatte aus einem elektrisch nicht leitenden Werkstoff hergestellt ist. Die Tragplatte 1 ist in nicht dargestellter Weise mit einem Förderer, beispielsweise einem Endlosförderer, verbindbar oder aber die Platten selbst können als Teil eines Gliederförderers ausgebildet sein, indem sie über Gelenke in Längsrichtung des Förderers miteinander verbunden sind.

An dem Tragteil 1 sind aufragende Bügel zum klemmenden und schnappartigen Erfassen von in dem Beispiel wiedergegebenen einendig offenen Dosen 2 befestigt. Die Bügelpaare sind dabei auf dem Tragteil 1 so angeordnet, daß sie jeweils diametral an gegenüberliegenden Stellen der Dosen 2, und zwar im Bereich des Bördelrandes 2a der Dose angreifen. In dem Beispiel ist bei jedem Bügelpaar ein innerer Bügel 3 vorgesehen, welcher mit einem äußeren Bügel 4 zusammenwirkt in der Weise, daß die Bügelabschnitte 3a und 4a in der Seitenansicht der Fig. 1 einander kreuzen und die Bügel infolge ihrer unterschiedlichen

Breite gemäß Fig. 2 im Bereich der sich kreuzenden Abschnitte 3a und 4a ineinandergreifen. Die Bügel 3 und 4 sind U-förmig gebogen und weisen mit ihren Mittelschenkeln 3b bzw. 4b von dem ebenen Tragteil 1 weg, so daß jeder Bügel zwei Abschnitte 3a bzw. 4a bildet und jeweils ein Abschnitt 3a und ein Abschnitt 4a relativ dicht beieinanderliegen und in der Weise an dem Bördelrand 2a der Dose 2 angreifen, daß die Abschnitte 3a an der Randkante des Bördelrandes 2a bzw. der Anrollung 2a angreift, während jeder Abschnitt 4a an der Außenwandfläche des Bördelrandes 2a anliegt. Die Bügel 3 und 4 bestehen in dem dargestellten Beispiel aus Federstahl und verlaufen mit ihren vom Tragteil 1 aufragenden Abschnitten lotrecht zu dem Tragteil und etwa parallel zueinander, wobei die Bügel 3 und 4 eines jeden Bügelpaares in der dargestellten Klemmstellung der Fig. 1 und 2 gegenüber der Ausgangsstellung federnd auseinandergedrückt sind, so daß sie auch federnd mit ihren Abschnitten 3a und 4a an dem Bördelrand 2a der Dosen 2 anliegen. An die Abschnitte 4a der Bügel 4 schließen sich jeweils gegenüber den Abschnitten 4a gegensinnig abgewinkelte Abschnitte 4c an, die in den Querschenkel 4b übergehen.

Die Abschnitte 4c verlaufen gemäß der Darstellung in Fig. 1 nahezu parallel zu den Abschnitten 3a der Bügel 3.

Durch die vorgenannte Ausbildung ist es besonders einfach, die Dosen 2 in die Haltevorrichtungen einzubringen und in die in Fig. 1 und 2 wiedergegebene Klemmstellung zu überführen. Es ist nämlich lediglich erforderlich, die Dosen 2 in bezug auf die jeweiligen einander zugeordneten Bügelpaare auszurichten und in Richtung ihrer Längsachse, d. h. in Richtung der Pfeile 5, gegen die Bügel zu drücken. Dabei gelangt der Bördelrand 2a zunächst in Kontakt mit den Schenkeln 4c der Bügel 4 und drückt diese aufgrund der Federungswirkung auseinander, bis der Bördelrand 2a auf den Schenkeln 3a der Bügel 3 trifft. Bei der Weiterbewegung werden die Schenkel 3a federnd nach außen gedrängt, und im Verlaufe dieser Bewegung gelangen die Abschnitte 4a bzw. Radien 4d zwischen den Abschnitten 4a und 4c der Bügel 4 in die Rundung der Anrollung 2a der Dose 2, so daß die Dose in diesem Bereich auf der Außenwandseite der Anrollung abgestützt wird, während die Abschnitte 3a der Bügel 3 federnd an der Randkante der Anrollung 2a anliegen.

Um die Dosen 2 aus der Haltevorrichtung zu entnehmen, ist es lediglich erforderlich, die Schenkel 4c bzw. den Mittelschenkel 4b der an der Dose 2 diametral anliegenden Bügel 4 von der Dose 2 nach außen wegzubewegen, bis die Abschnitte 4a bzw. die Radien 4d mit der Anrollung 2a der Dose außer Eingriff gelangen. Durch die Federungswirkung der Schenkel 3a der Bügel 3 wird in diesem Augenblick die Dose 2 in Richtung gegen den Pfeil 5 ausgeworfen, so daß der Bügel 3 auch gleichzeitig als Auswurffeder wirksam ist.

Die Bügel 3 und 4 sind in dem dargestellten Beispiel mit ihren dem Tragteil 1 zugekehrten Enden zunächst in die Ebene des Tragteiles abgewinkelt und greifen mit ihren nochmals abgewinkelten Endabschnitten 3d bzw. 4d in Bohrungen 6 bzw. 7 des Tragteiles 1 ein, so daß die Enden 3d bzw. 4d fixiert sind. Gehalten werden die Bügel 3 und 4 auf dem Tragteil 1 mittels einer Klemmplatte 8, welche mit dem Tragteil 1 verschraubt ist.

Bei der vorbeschriebenen Ausführung können die Bügel 3 und 4 nicht gegeneinander verschoben werden. Wenn auf die abgewinkelten und in die Bohrung 6 und 7 eingesteckten Enden 3d und 4d verzichtet wird, können die Bügel auch auf dem Tragteil 1 unter Verwendung der Klemmplatte 8 in unterschiedliche Positionen zueinander einstellbar gehalten sein.

Die Fig. 2 zeigt deutlich, daß die Bügel 3 schmaler ausgebildet sind als die Bügel 4, so daß die genannten Bügel mit ihren Abschnitten 3a und 4a sich kreuzend ineinandergreifen können und an relativ dicht benachbarten Stellen an dem Bördelrand 2a der Dose 2 angreifen.

In dem wiedergegebenen Beispiel ist angenommen, daß die Haltevorrichtung für eine Elektrotauchlackierung der Dosen 2 vorgesehen ist. Aus diesem Grunde zeigt die Fig. 1 eine auf dem Tragteil 1 aus elektrisch nicht leitendem Werkstoff gehaltene Elektrode 10, welche in das Innere der zwischen den Bügeln 3 und 4 gehaltenen Dose 2 eingreift.

Die Fig. 3 veranschaulicht die bereits oben beschriebene Entnahme der Dose 2 aus der Haltevorrichtung bzw. den Auswurf der Dose 2. Hierzu ist ein Spreizwiderlager 9 vorgesehen, welches auf den jeweiligen Schenkel 4c des Bügels 4 mit zunehmender Verlagerung der Widerlagerfläche 9a in Richtung zu dem Bördelrand 2a hin den Schenkel 4c des Bügels 4 nach außen drängt, bis der Abschnitt 4a bzw. der Radius 4d außer Eingriff mit dem Bördelrand 2a kommt.

In der Praxis erfolgt die Übergabe und die Abgabe der Dosen zu bzw. von den Haltevorrichtungen in der Weise, daß zwei im Abstand angeordnete Förderer vorgesehen werden, von denen der obere Förderer mit den Tragteilen 1 ausgerüstet ist, während auf dem unteren Förderer die Dosen 2 mit nach oben weisenden Bördelrändern 2a in einem den Haltevorrichtungen entsprechenden Abstand angeordnet sind. Durch Zusammenführen der beiden Förderer werden die Dosen 2 in der beschriebenen Weise zwischen die jeweiligen Bügelpaare gedrückt, bis sie von diesen in der in den Fig. 1 und 2 wiedergegebenen Stellung klemmend gehalten werden. Zur Freigabe der Dosen 2 werden diese wiederum auf einen parallel zu dem Förderer mit den Tragteilen 1 ausgerüsteten Förderer überführt, wobei im Zuge der Förderbewegung beidseits der Dosen 2 angeordnete ortsfeste Widerlager so angeordnet werden, daß diese mit ihren Widerlagerflächen 9a eine zunehmende Spreizung der Schenkel 4c der Bügel 4 bewirken, bis der Auswurf der Dosen 2 durch die Bügel 3 bzw. Bügelabschnitte 3a erfolgt und die Dosen durch die Federwirkung dieser Bügel auf den Weiterförderer gedrückt werden, wobei durch

allmähliche Entfernung der beiden parallel und mit synchroner Geschwindigkeit laufenden Förderer die Dosen außerhalb des Wirkbereiches der Haltevorrichtungen gelangen.

Statt der beschriebenen Ausbildung der U-förmigen Bügel 3 und 4 können auch einzelne Bügelstäbe vorgesehen sein, welche auch ohne die Querstege 3b bzw. 4b zu einer Klemmwirkung führen, welche allerdings wesentlich geringer ist als bei Ausbildung der Bügel 3 und 4 in U-Form. Eine besonders günstige Wirkung der Haltekräfte wird erreicht, wenn die Bügel 3 und 4 in ihrer Breite mindestens einem Drittel des Durchmessers der Dosen 2 entsprechen und hierdurch eine günstige Verteilung der Klemmstellen der Bügel 3 und 4 auf dem Umfang des Bördelrandes 2a erzielt wird.

**Patentansprüche**

1. Haltevorrichtung für Dosenrümpfe oder einendig offene Dosen zum Transport auf Förderern, insbesondere zur Förderung durch Behandlungszonen für die Dosenrümpfe oder Dosen, dadurch gekennzeichnet, daß auf einem mit dem Förderer verbindbaren oder bei einem Gliederförderer auf einem als Glied des Förderers ausgebildeten ebenen Tragteil (1) aufragende Bügel (3 ; 4) aus federndem Werkstoff befestigt und zum klemmenden und schnappartigen Erfassen der Dosenrümpfe oder Dosen (2) an diametral gegenüberliegenden Stellen je zwei Bügelpaare einander zugeordnet sind, deren Bügel sich jeweils kreuzende benachbarte Abschnitte (3a, 4a) aufweisen und von denen jeweils ein Bügel (3) zur Anlage an die Randkante und der andere Bügel (4) zur Abstützung an der Außenwandfläche der dem Tragteil zugekehrten Anrollung (2a) des Dosenrumpfes oder der Dose vorgesehen ist.

2. Vorrichtung nach Anspruch 1, dadurch gekennzeichnet, daß die Bügel (3 ; 4) aus Federstahl bestehen und lösbar sowie einzeln und/oder paarweise an dem Tragteil (1) gehalten sind.

3. Vorrichtung nach Anspruch 1 oder 2, dadurch gekennzeichnet, daß jeder Bügel (3 bzw. 4) U-förmig ausgebildet und mit Abwinklungen an den Enden der freien Schenkel über eine jeweils einem Bügelpaar zugeordnete Klemmplatte (8) an dem Tragteil gehalten ist.

4. Vorrichtung nach Anspruch 3, dadurch gekennzeichnet, daß die Bügel (3 bzw. 4) eine Breite aufweisen, welche mindestens einem Drittel des Dosendurchmessers oder der Dose (2) entspricht.

5. Vorrichtung nach einem der vorhergehenden Ansprüche, dadurch gekennzeichnet, daß die Bügel (3) der jeweils einander zugekehrten Paare, welche zur Anlage an die Randkante der Anrollung (2a) des Dosenrumpfes oder der Dose (2) vorgesehen sind, wenigstens im Bereich ihrer Anlage an die Randkante voneinander weggeneigte Abschnitte (3a) aufweisen, und daß die anderen Bügel (4) der Paare mit einander zugeneigten Abschnitten (4a) zum Abstützen an der Außenwandfläche der Anrollung ausgerüstet sind.

6. Vorrichtung nach Anspruch 5, dadurch gekennzeichnet, daß die Bügel (4) zum Abstützen an der Außenwandfläche der Anrollung (2a) von den einander zugeneigten Abschnitten ausgehende voneinander wegweisende Endabschnitte (4c) aufweisen, welche etwa parallel zu den Abschnitten (3a) der anderen Bügel (3) des jeweiligen Paares verlaufen.

7. Vorrichtung nach einem der vorhergehenden Ansprüche, dadurch gekennzeichnet, daß alle Bügel (3, 4) etwa lotrecht zu dem Tragteil (1) aufragende Abschnitte aufweisen, an die sich die abgewinkelten Abschnitte (3a, 4a) anschließen.

8. Vorrichtung nach einem der vorhergehenden Ansprüche, dadurch gekennzeichnet, daß der ebene Tragteil (1) als Platte ausgebildet ist.

9. Vorrichtung nach Anspruch 8, dadurch gekennzeichnet, daß der ebene Tragteil als siebartig gelochte Platte ausgebildet ist.

10. Vorrichtung nach einem der vorhergehenden Ansprüche, dadurch gekennzeichnet, daß die ebenen Tragteile aus elektrisch nicht leitendem Werkstoff bestehen.

**Claims**

1. A holding device for can bodies or cans open at one end for transportation on conveyors, more particularly for conveying them through treatment zones for the can bodies or cans, characterised in that projecting clamps (3 ; 4) comprising resilient material are fixed to a flat support member (1) which may be connected to the conveyor or, with a jointed conveyor, is formed as a joint of the conveyor and for the purpose of gripping the can bodies or cans (2) in a clamping and snapping manner at diametrically opposite points two pairs of clamps are associated with each other, the clamps of these clamp pairs having crossing, adjacent portions (3a, 4a) and one clamp (3) thereof in each case is provided for abutment on the rim edge and the other clamp (4) is provided for support on the outer wall surface of the can body or can lip (2a) facing the support member.

2. A device according to claim 1, characterised in that the clamps (3 ; 4) comprise spring steel and are held detachably, and individually and/or in pairs on the support member (1).

3. A device according to claim 1 or 2, characterised in that each clamp (3 or 4) is U-shaped and is held on the support member by angled portions on the ends of the free limbs by means of a clamping plate (8) in each case associated with a pair of clamps.

4. A device according to claim 3, characterised in that the clamps (3 or 4) have a width which corresponds at least to one third of the can diameter or of the can (2).

5. A device according to any one of the preceding claims, characterised in that the clamps (3) of the respective facing pairs, which are provided for abutment on the edge rim of the lip (2a) of the

can body or of the can (2), have portions (3a) inclined away from each other at least in the region of their abutment on the edge rim, and that the other clamps (4) of the pairs are equipped with portions (4a) inclined towards each other, for support on the outer wall surface of the lip.

6. A device according to claim 5, characterised in that the clamps (4) for support on the outer wall surface of the lip (2a) have end portions (4c) directed away from each other and starting from the portions inclined towards each other, said portions (4c) running approximately parallel with the portions (3a) of the other clamps (3) of the respective pair.

7. A device according to any one of the preceding claims, characterised in that all of the clamps (3, 4) have portions projecting approximately perpendicular to the support member (1), connected to which are the angled portions (3a, 4a).

8. A device according to any one of the preceding claims, characterised in that the flat support member (1) is formed as a plate.

9. A device according to claim 8, characterised in that the flat support member is formed as a plate perforated like a sieve.

10. A device according to any one of the preceding claims, characterised in that the flat support members comprise electrically non-conductive material.

**Revendications**

1. Dispositif de retenue pour des corps de récipients ou pour des récipients ouverts à une extrémité en vue de leur transport sur des convoyeurs, en particulier pour leur transport à travers des zones de traitement des corps de récipients ou des récipients, caractérisé par le fait que des étriers (3, 4) en matière élastique sont fixés en saillie sur un élément porteur plan (1) qui peut être relié au convoyeur ou qui, dans le cas d'un convoyeur à maillons, est réalisé sous la forme d'un maillon du convoyeur, et que deux paires d'étriers opposés sont montées en des endroits diamétralement opposés pour saisir les corps de récipients ou les récipients (2) en les serrant et avec un encliquetage, paires dont les étriers se croisent entre eux sur des parties voisines (3a, 4a), chaque étrier (3) de l'une de ces paires étant prévu pour reposer sur le bord du bourrelet (2a) du corps de récipient ou du récipient qui est tourné vers l'élément porteur (1), et chaque étrier (4) de l'autre paire étant prévu pour s'appuyer sur la surface extérieure de ce bourrelet.

2. Dispositif selon la revendication 1, caractérisé par le fait que les étriers (3, 4) sont en acier à ressorts et, isolément et/ou par paires, sont maintenus de manière amovible sur l'élément porteur (1).

3. Dispositif selon la revendication 1 ou 2, caractérisé par le fait que chaque étrier (3 ou 4) est réalisé en forme de U et qu'il est maintenu sur l'élément porteur par les extrémités pliées de ses ailes libres au moyen d'une plaque de serrage (8) montée en face d'un étrier de chaque paire.

4. Dispositif selon la revendication 3, caractérisé par le fait que les étriers (3 ou 4) présentent une largeur qui correspond au moins au tiers du récipient (2) ou de son diamètre.

5. Dispositif selon l'une des revendications précédentes, caractérisé par le fait que les étriers (3) des paires adjacentes entre elles qui sont prévus pour s'appuyer sur le bord du bourrelet (2a) du corps de récipient ou du récipient (2) présentent, du moins dans la région où ils s'appuient sur ce bord, des parties (3a) s'écartant l'une de l'autre, et que les autres étriers (4) de ces paires sont munis de parties (4a) dirigées l'une vers l'autre pour s'appuyer sur la surface extérieure du bourrelet.

6. Dispositif selon la revendication 5, caractérisé par le fait que les étriers (4) destinés à s'appuyer sur la surface extérieure du bourrelet (2a) présentent des parties terminales (4c) qui partent des parties dirigées l'une vers l'autre, qui s'écartent l'une de l'autre et qui s'étendent de manière sensiblement parallèle aux parties (3a) des autres étriers (3) de la paire correspondante.

7. Dispositif selon l'une des revendications précédentes, caractérisé par le fait que tous les étriers (3, 4) présentent des parties qui font saillie de l'élément porteur (1) perpendiculairement à lui et auxquelles se raccordent les parties pliées (3a, 4a).

8. Dispositif selon l'une des revendications précédentes, caractérisé par le fait que l'élément porteur plan (1) est réalisé sous la forme d'une plaque.

9. Dispositif selon la revendication 8, caractérisé par le fait que l'élément porteur plan est réalisé sous la forme d'une plaque percée à la manière d'un tamis.

10. Dispositif selon l'une des revendications précédentes, caractérisé par le fait que les éléments porteurs plans sont constitués en une matière non conductrice de l'électricité.

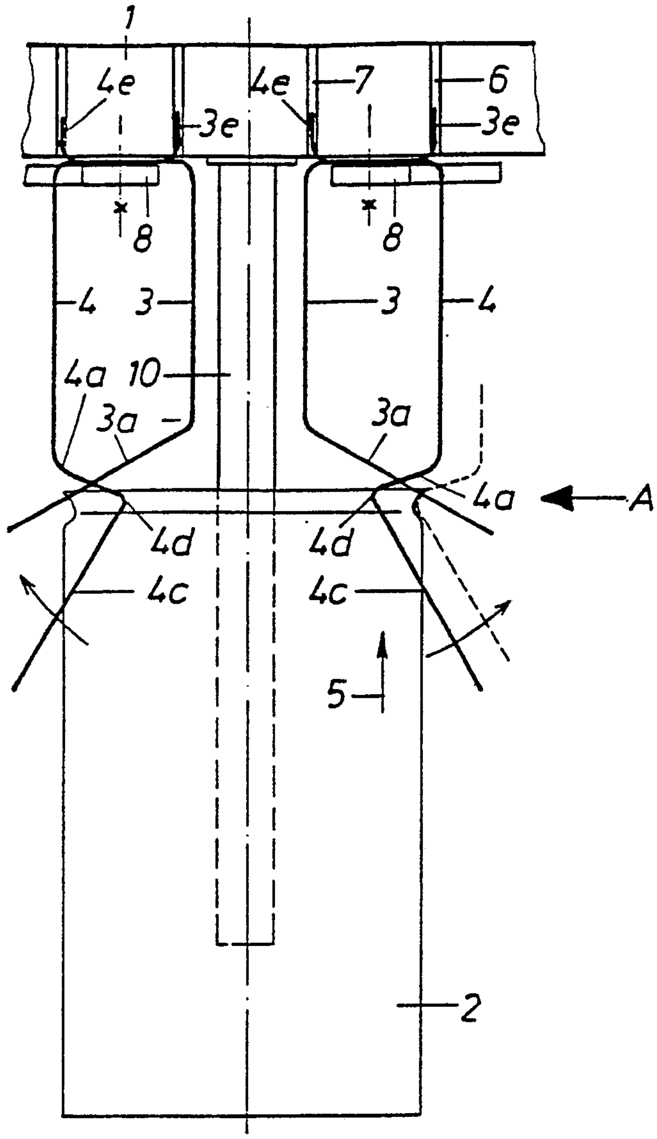


Fig.1

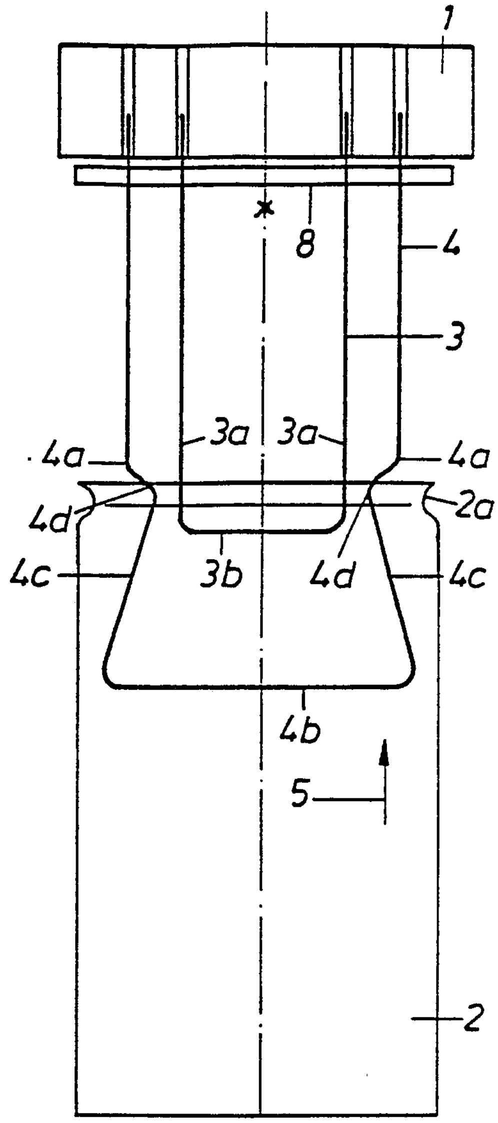


Fig. 2

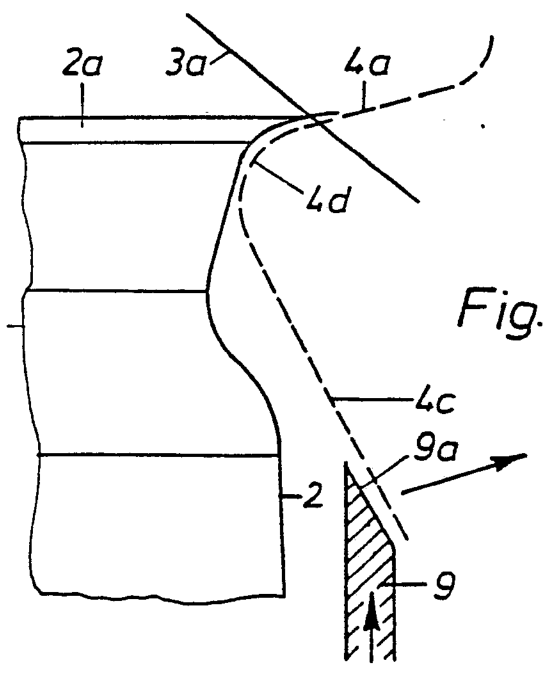


Fig. 3